# EUROPÄISCHE PATENTSCHRIFT

(11) **EP 2 548 484 B1**
(45) Veröffentlichungstag und Bekanntmachung des Hinweises auf die Patenterteilung: **21.05.2014**
(21) Anmeldenummer: 12175320.6
(22) Anmeldetag: 06.07.2012
(51) Int. Cl.: A47J 31/58

(54) **Füllmengenerkennung für Ver- oder Entsorgungsbehälter**
Filling volume detection for supply container or disposal container
Détection d'une quantité de remplissage pour récipient d'alimentation ou d'évacuation

(30) Priorität: 21.07.2011 DE 102011079546
(43) Veröffentlichungstag der Anmeldung: 23.01.2013
(73) Patentinhaber: BSH Bosch und Siemens Hausgeräte GmbH, 81739 München (DE)
(72) Erfinder: Franzke, Peter, 83229 Sachrang/Aschau (DE); Gerl, Bernhard, 83278 Traunstein (DE); Wölfler, Andreas, 5760 Saalfelden (AT)

(56) Entgegenhaltungen:
- EP-A1- 1 647 951
- EP-A1- 2 452 596
- EP-A2- 0 517 172
- DE-U1- 29 800 175

## Beschreibung

Die Erfindung betrifft eine Getränkezubereitungsmaschine mit einem Aufnahmebereich zur Aufnahme mindestens eines Ver- oder Entsorgungsbehälters, und mit einer Sensoranordnung zur Erfassung eines Befüllungszustands der Getränkezubereitungsmaschine in Bezug auf den Ver- oder Entsorgungsbehälter, die eine erste, durch das Gewicht des Ver- oder Entsorgungsbehälters betätigbare Erfassungseinrichtung umfasst. Versorgungsbehälter derartiger Zubereitungsmaschinen enthalten regelmäßig Zubereitungsflüssigkeiten, beispielsweise Wasser für Brühgetränke oder Milch. Entsorgungsbehälter dagegen nehmen Reststoffe der Zubereitung auf, beispielsweise Kaffeetrester, Restwasser aus einem Brühvorgang oder verbrauchte und entleerte Getränkekapseln. Die Ver- und Entsorgungsbehälter müssen vom Gerätebediener nicht nur befüllt oder entleert werden, wofür deren Befüllungszustand erfasst wird. Für einen einwandfreien Betrieb der Getränkezubereitungsmaschine müssen die Ver- und Entsorgungsbehälter auch überhaupt vorhanden und korrekt positioniert sein. Diesbezügliche Fehler in der Bedienung müssen erfasst und dem Bediener mitgeteilt werden. Dies erfolgt in aller Regel durch eine sensorische Erfassung, die einen gewissen technischen Aufwand verursacht und damit einen Beitrag zu den Herstellungskosten der Getränkezubereitungsmaschine leistet.

Die EP 0 517 172 A2 zeigt eine Schankvorrichtung zur portionierten Ausgabe von Getränken aus wenigstens einer Flasche, deren Öffnung mit einer im Bereich des Flaschenhalses vormontierten Ventileinrichtung versehen ist, mit mindestens einer Flaschenhalterung zur Aufnahme einer auf den Kopf gestellten Flasche bzw. der Ventileinrichtung derselben, dadurch gekennzeichnet, daß die Flaschenhalterung an eine Einrichtung zur Erfassung des Gewichts der Flasche samt enthaltenem Getränk angeschlossen ist, und daß eine mit dieser Einrichtung verbundene, elektronische Steuereinrichtung vorgesehen ist, die die Ventileinrichtung (2) zur Ausgabe einer beiselelsweise über eine Tastatur gewählten Getränkeportion aus der Flasche (3) in Abhängigkeit vom erfaßten Gewicht bzw. von der Gewichtsänderung der Flasche (3) samt enthaltenem Getränk steuert.

Die DE 298 00 175 U1 zeigt eine Kaffeemaschine mit Dosiersignalanordnung umfassend ein Kaffemehl aufnehmendes Filtergefäß sowie einen Wasserbehälter, der mit einem Dampferzeuger, insbesondere einem Durchlauferhitzer, in wasserleitender Verbindung steht, wobei der Dampferzeuger ausgangsseitig zu dem Flltergefäß geführt ist, wobei der Wasserbehälter mit einem Wassermengensensor verbunden ist, das Filtergefäß mit einem Kaffeemehlmengensensor gekuppelt ist und mindestens je ein Ausgang des Wassermengensensors und des Kaffeemehlmengensensors zu je einem Eingang einer Vergleichseinrichtung geführt sind, die geeignet ist, eine Anzeigevorrichtung abhängig von dem Verhältnis der Ausgangsgrößen des Wassermengensensors und des Kaffeemehlmengensensors zu betätigen.

Die EP 1 647 951 A1 zeigt einen Getränkebereiter, insbesondere eine Kaffeemaschine wobei zur Bereitung eines Getränks Wasser vorzugsweise einem Aromatauscher, und das Getränk daraus einem Auslauf über einer Trägerfläche für ein Auffanggefäß zugeführt wird, und dieser Flüssigkeitsdurchsatz von einer Steuervorrichtung gesteuert ist, wobei die Steuervorrichtung mindestens einen Kennwert des jeweils untergestellten Auffanggefäßes berücksichtigt.

Die EP 2 452 596 A1 beschreibt eine Getränkezubereitungsmaschine, die für die oben beschriebene Erfassung von Ent- bzw. Versorgungsbehältern lediglich einen einzigen Sensor erfordert. Der Sensor erfasst den Befüllungszustand eines Behälters, während eine Hebelanordnung, die In Abhängigkeit vom Befüllungszustand betätigbar ist, in einer bestimmten vordefinierten Stellung den Sensor anregt, so dass sie ein Erkennungssignal aktiviert.

Aufgabe der Erfindung ist es, eine Erfassung auch unterschiedlicher Ver- oder Entsorgungsbehälter in einem Stellbereich der Getränkezubereitungsmaschine erfassen zu können.

Diese Aufgabe wird bei einer Getränkezubereitungsmaschine der eingangs genannten Art dadurch gelöst, dass eine zweite Erfassungseinrichtung zur Erfassung einer weiteren Information des Ver- oder Entsorgungsbehälters oder auf dem Ver- oder Entsorgungsbehälter zur Verfügung steht. Die Erfindung löst sich damit von dem Gedanken, dass in einem Aufstellbereich für Behälter in einer Getränkezubereitungsmaschine lediglich ein einziger dafür vorgesehener Behälter stehen und detektiert werden kann. Die Erfindung verfolgt vielmehr das Prinzip, unterschiedliche Ver- oder Entsorgungsbehälter zu ermöglichen und sie gleichwohl sowohl bezüglich ihrer Anwesenheit als auch bezüglich ihrer korrekten Positionierung und erst recht bezüglich ihres Füllstands zu überwachen. Die dazu vorgesehene zweite Erfassungseinrichtung detektiert dazu Aspekte des Ver- oder Entsorgungsbehälters selbst, nämlich beispielsweise dessen räumliche Merkmale wie seinen Grundriss, seine Höhe oder vollflächige Informationen, zum Beispiel seine Farbe, oder teilflächige Informationen auf dem Behälter, beispielsweise einen Aufdruck, ein Muster oder einen Code. Damit gelingt es, aus den beiden Informationen der beiden Erfassungseinrichtungen, nämlich einer gewichtsbezogene Information der ersten Erfassungseinrichtung einerseits, und der weiteren Information der zweiten Erfassungseinrichtung andererseits, auf den Befüllungszustand des Behälters zu schließen. Da die erste Erfassungseinrichtung für das Gewicht des bzw. eines Behälters betätigt wird, sensiert sie zugleich auch sein Vorhandensein und kann beim Fehlen eines Behälters eine Störmeldung auslösen.

Die erste Erfassungseinrichtung its durch das Gewicht des Ver- oder Entsorgungsbehälters betätigbar. Sie ist jedoch nicht, wie im Stand der Technik, als Waage ausgebildet. Erfindungsgemäß genügt es, nur das Über- oder Unterschreiten eines Schwellwerts einer Befüllung des Behälters bzw. eines Gesamtgewichts zu detektieren. Es ist also keine zeitlich oder betragsmäßig kontinuierliche Gewichtsüberwachung erforderlich. Es genügt vielmehr, einen Mindestfüllstand eines Versorgungsbehälters mit einer Zubereitungsflüssigkeit für wenigstens noch ein Getränk oder einen Höchstfüllstand eines Entsorgungsbehälters mit dem Raum für die Reststoffe wenigstens einer Getränkezubereitung zu erfassen. Daher detektiert die erste Erfassungseinrichtung erfindungsgemäss lediglich das Über- bzw. Unterschreiten dieses vorher genau definierten Schwellwerts. Dazu kann sie beispielsweise nach dem Prinzip einer Wippe ausgebildet sein, deren eine Seite durch den Ver- bzw. Entsorgungsbehälter belastet wird, und deren andere Seite mit einer Sensoranordnung kommuniziert. Der Schwellwert, ab dem die Sensoranordnung aktiviert wird, kann durch eine Vorspannung der Wippe entgegen der auf sie wirkenden Gewichtskraft des Behälters definiert sein, also beispielsweise durch ein Spannelement, ein Federelement oder ein Gegengewicht. Zum

Schutz der Vorspannung oder der Sensoranordnung kann die Wippe in wenigstens einer ihrer Endlagen Anschläge aufweisen, die ihre Auslenkung beschränken.

Die Sensoranordnung kann in einem einfachen Fall einen Signalgeber im Sicht- bzw. Hörbereich des Kunden umfassen, der bei Erreichen des Schwellwerts ein optisches oder akustisches Signal abgibt. In einem einfachen Fall kann der Signalgeber ein Zeiger sein, der eine für den Bendiener sichtbare Markierung über- oder unterschreitet. Alternativ kann die Sensoranordnung beispielsweise ein optisches, mechanisches, magnetisches oder anderweitig betätigbares Schaltelement aufweisen, dessen Signal elektronisch weiterverarbeitet werden kann. Damit muss keine Sichtbeziehung zwischen der Sensoranordnung und dem Bediener bestehen. Der Ver- oder Entsorgungsbehälter kann dadurch vorteilhaft auch in einem Bereich der Getränkezubereitungsmaschine liegen, der nicht im Sichtbereich des Kunden, also verdeckt liegt. Dadurch ist die Erfindung besonders für Einbaugeräte geeignet, die regelmäßig nur noch eine Frontseite als Ansichtfläche haben. Sie können zusätzlich vor einem Ausschalten noch ein entsprechendes Signal abgeben, das auf die Notwendigkeit einer Servicetätigkeit wie einem Nachfüllen eines Versorgungs- oder dem Entleeren eines Entsorgungsbehälters hinweist.

Durch Erfassen der ersten Information, nämlich derjenigen bezüglich des Gewichts des Ver- bzw. Entsorgungsbehälters, kann unter Auswertung der zweiten Information der Befüllungszustand des konkreten Behälters analysiert und ggf. ein Signal abgegeben werden. Diese Anordnung erlaubt eine Füllstandsanzeige des Ver- bzw. Entsorgungsbehälters, ohne dass ein unmittelbarer Kontakt zum Inhalt des Behälters erforderlich wäre. Dadurch entfällt eine Schnittstelle zwischen der Getränkezubereitungsmaschine und dem Behälter, so dass sich eine Vielzahl von unterschiedlichen Behältern in die Getränkezubereitungsmaschine einsetzen lassen.

Die zweite Erfassungseinrichtung kann also Informationen aus einer Vielzahl möglicher Informationen des oder auf dem Ver- bzw. Entsorgungsbehälter erfassen. Nach einer vorteilhaften Ausgestaltung der Erfindung ist sie auf die Erfassung einer räumlichen Größe des Ver- oder Entsorgungsbehälters ausgelegt. Die Größe des Behälters, also beispielsweise seine Länge, Breite, sein Grundriss oder seine Höhe, lassen sich von so gut wie allen Seiten des Behälters aus erfassen, also weitgehend unabhängig von seiner Positionierung bzw. Drehung um seine Hochachse.

Auch die Erfassung zweier Informationen, nämlich diejenigen des Gewichts und einer zusätzlichen Information des Ver- oder Entsorgungsbehälters, reichen oft noch nicht aus, um einen Befüllungszustand unterschiedlicher Behälter ermitteln zu können. Die Erfindung lässt sich jedoch von der Erkenntnis leiten, dass die Anzahl derjenigen Behälter, die als Ver- oder Entsorgungsbehälter tatsächlich in Frage kommen, durchaus beschränkt ist. Sie verfolgt daher das Prinzip, neben dem Gewicht eine weitere charakteristische Größe des Behälters zu erfassen, um die weitaus geringere Anzahl möglicher Behälter, die jedenfalls regelmäßig zum Einsatz kommen können, voneinander zu unterscheiden.

Nach einer weiteren vorteilhaften Ausgestaltung der Erfindung umfasst die zweite Erfassungseinrichtung mechanische Erfassungsmittel. Sie lassen sich auf räumliche Merkmale des Ver- bzw. Entsorgungsbehälters sehr genau festlegen. Zudem lassen sie sich robust und pflegeleicht ausbilden. Damit ist eine geringe Fehlerquote der zweiten Erfassungseinrichtung zu erwarten.

Aus der Vielzahl der möglichen räumlichen Informationen des Behälters kann nach einer weiteren vorteilhaften Ausgestaltung der Erfindung die Erfassung einer Kontur einer Stellfläche des Ver- oder Entsorgungsbehälters, also sein Grundriss erfasst werden. Da eine bestimmte maximale Höhe des Behälters aus Platzgründen ohnehin konstruktiv vorgegeben ist, lässt sich anhand seiner Kontur bzw. Größe seiner Stellfläche eine gute Unterscheidung gegenüber anderen möglichen Behältern treffen. Ein mechanisches Erfassungsmittel kann beispielsweise eine Matte aus regelmäßig angeordneten Drucksensoren darstellen. Wird der Ver- bzw. Entsorgungsbehälter bestimmungsgemäß in die Getränkezubereitungsmaschine eingesetzt, aktiviert er einen bestimmten Teilbereich der Drucksensormatte. Über die aktivierten einzelnen Drucksensoren lässt sich auf die Grundrissgröße bzw. Kontur des Behälters schließen.

Nach einer weiteren vorteilhaften Ausgestaltung der Erfindung kann die Getränkezubereitungsmaschine in ihrem Aufstellbereich über eine Aufstellplatte für den Ver- oder Entsorgungsbehälter als Bestandteil der ersten Erfassungseinrichtung umfassen, wobei die Aufstellplatte in mindestens zwei Teilplatten unterteilt ist, die jeweils unabhängig voneinander mit der Sensoranordnung kommunizieren können. Die Aufstellplatte ist folglich in Teilbereiche untergliedert, die je nach Ver- oder Entsorgungsbehälter, der auf die Aufstellplatte gestellt wird, insgesamt oder auch nur in einer Teilmenge aktiviert werden. Je nachdem, welche bzw. wie viele Teilflächen der Behälter belastet, kann auf dessen Größe geschlossen werden. Je kleiner die Teilflächen im Verhältnis zur Größe der Aufstellplatte sind, kann sogar die Kontur des Behälters ermittelt werden. Damit kann die Unterteilung der Aufstellplatte in Teilflächen eine ähnliche Funktionalität wie eine Drucksensormatte bieten. Je feiner die Unterteilung der Aufstellplatte in Teilplatten, umso größer allerdings der mechanische Aufwand, weil jede Teilplatte separat mit der ersten Erfassungseinrichtung kommunizieren muss. Bei einem Aufbau der ersten Erfassungseinrichtung nach dem Prinzip einer Wippe würde folglich jede Teilplatte über eine eigene Wippe verfügen. Die in Teilplatten unterteilte Aufstellplatte stellt jedenfalls eine mechanische zweite Erfassungseinrichtung dar, weil sie auf mechanische Weise die Größe der Aufstellfläche des Behälters detektiert.

Nach einer weiteren vorteilhaften Ausgestaltung der Erfindung können die Teilplatten der Aufstellplatte konzentrisch zueinander angeordnet sein. Dadurch kann die Konstruktion der zweiten Erfassungseinrichtung vereinfacht und ihr mechanischer Aufwand verringert werden. Die konzentrische Anordnung der Teilplatten macht sich den Umstand zunutze, dass der Ver- oder Entsorgungsbehälter auf einer Aufstellplatte positioniert wird, die aus Platzgründen regelmäßig nur unwesentlich größer ist als der größtmögliche Ver- bzw. Entsorgungsbehälter. Auch ein kleinerer Behälter wird im Wesentlichen zentral auf die Platte aufgestellt und dürfte aus Optimierungsgründen nicht wesentlich kleiner ausfallen als der größtmögliche Behälter. Die Teilplatten können folglich eine Art Schablone zur Unterscheidung verschiedener Behälter unterschiedlicher Größe darstellen. Je geringer die Anzahl an unterschiedlichen Teilflächen, umso einfacher und nachvollziehbarer fällt auch die Bedienung der Getränkezubereitungsmaschine aus. Denn je einfacher der Benutzer einen Behälter einem konkreten Umriss einer Teilplatte zuordnen kann, umso genauer wird er den Behälter auf der entsprechenden Teilplatte positionieren. Dadurch steigt die Genauigkeit der Sensoranordnung bzw. sinkt die Fehlerquote der Erfassungseinrichtung.

Zumindest eine erste Teilplatte sollte eine Mindestaufstellfläche bieten, damit der Ver- oder Entsorgungsbehälter einen stabilen Stand findet. Wenn jedenfalls eine erste Teilplatte eine ausreichende Aufstellfläche für einen sicheren Stand des größtmöglichen Ver- bzw. Entsorgungsbehälters bietet, können die übrigen Teilplatten flächenmäßig verkleinert werden. Sie können dann ggf. auf kleine Tasten oder Stifte reduziert werden, die einen Überstand eines Behälters über die erste Teilplatte detektieren. Sie müssen nicht zwingend konzentrisch angeordnet sein, sondern können nahezu beliebig im Bereich der ersten Teilplatte positioniert werden. Dadurch kann Material eingespart und die Konstruktion der zweiten Erfassungseinrichtung vereinfacht werden.

Nach einer alternativen Ausgestaltungsform der Erfindung kann die zweite Erfassungseinrichtung über optische Erfassungsmittel verfügen. Darunter fallen beispielsweise Lichtschranken, Stereokameras, Lichtsensormatten oder Lesegeräte, die auf den Ver- bzw. Entsorgungsbehälter gerichtet sind. Optische Erfassungsmittel für die zweite Erfassungseinrichtung bieten den Vorteil, dass sie den Behälter ohne Kontakt zu ihm berührungslos detektieren. Je nachdem, welche Information des oder auf dem Behälter sie erfassen, können auch sich ändernde Behälter verwendet werden. Damit bieten optische Erfassungsmittel eine gewisse Flexibilität.

Nach einer vorteilhaften Ausgestaltung der Erfindung kann die zweite Erfassungseinrichtung ein zweidimensionales Muster auf dem Ver- bzw. Entsorgungsbehälter erfassen. Bei dem zweidimensionalen Muster kann es sich z. B. um einen Farb- oder Strichcode handeln. Er kann von einem Lesegerät als zweiter Erfassungseinrichtung erfasst werden, das die im Code verschlüsselten Informationen an die Sensoranordnung weitergibt. Sie kann insbesondere das Leergewicht des Behälters enthalten, so dass aus der Differenz zwischen dem Leergewicht und einem gemessenen tatsächlichen Gewicht auf den Befüllungszustand des Behälters geschlossen werden kann.

Das Prinzip der Erfindung wird im Folgenden anhand einer Zeichnung beispielshalber noch näher erläutert. In der Zeichnung zeigen:
- Figur 1: das Schema einer Sensoranordnung,
- Figur 2: die Sensoranordnung mit einem runden Versorgungsbehälter, und
- Figur 3: die Sensoranordnung mit einem eckigen Versorgungsbehälter.

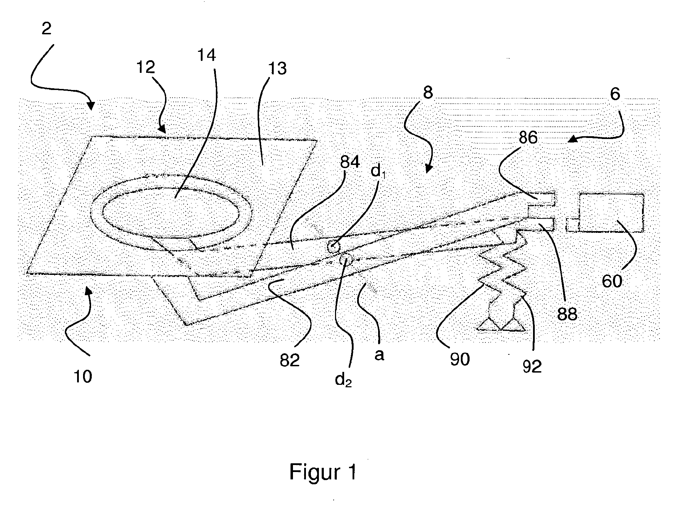

Figur 1 zeigt eine Sensoranordnung 6 einer Getränkezubereitungsmaschine. Sie umfasst eine erste Erfassungseinrichtung 8 und eine zweite Erfassungseinrichtung 10. Die erste Erfassungseinrichtung 8 umfasst zwei weitgehend parallel verlaufende Arme 82, 84, die um eine Achse a an ihren Drehpunkten d1 und d2 drehbar gelagert sind, so dass sie eine Art Wippe darstellen. An ihrem rechten Ende tragen die Arme 82, 84 jeweils einen Signalgeber 86, 88. Sie kommunizieren mit einem Sensor 60. Beide Arme 82, 84 sind an demselben Ende federbelastet, indem sie mit Zugfedern 90, 92 gegenüber einem nicht dargestellten Gerätegehäuse der Getränkezubereitungsmaschine auf Zug vorgespannt sind.

An ihrem linksseitigen Ende die Arme 82, 84 abgewinkelt und stehen mit der zweiten Erfassungseinrichtung 10 in Verbindung, und zwar mit einer ebenen Aufstellplatte 12. Die Aufstellplatte 12 befindet sich in einem Aufnahmebereich 2 der Getränkezubereitungsmaschine, in den ein Benutzer der Maschine einen Versorgungsbehälter für Milch abstellen kann. Der Aufnahmebereich 2 ist also für den Benutzer zugänglich.

Die Aufstellplatte 12 hat einen quadratischen Umriss und unterteilt sich in zwei konzentrisch angeordnete Teilplatten 13 und 14. Die Teilplatte 14 ist kreisrund und schneidet aus der Teilplatte 13 eine entsprechende konzentrische Teilfläche aus der Aufstellplatte 12 aus. Die Teilplatte 13 macht den verbleibenden Teil der Aufstellplatte 12 aus und umgibt die Teilplatte 14 folglich rahmenförmig.

Die Ausgestaltung der Aufstellplatte 12 selbst stellt die zweite Erfassungseinrichtung 10 dar: die Teilplatte 13 fungiert als unbelastete Schablone für Versorgungsbehälter, deren Aufstellfläche maximal so groß ist wie die Teilplatte 14. Richtig positioniert belasten sie lediglich die Teilplatte 14. Größere Versorgungsbehälter belasten beide Teilplatten 13, 14. Damit kann eine Unterscheidung zwischen Versorgungsbehältern unterschiedliche Größe vorgenommen werden.

Die Teilplatte 13 ist mit dem Arm 82 mechanisch gekoppelt, die Teilplatte 14 mit dem Arm 84. Wird die Teilplatte 14 belastet, so senkt sie die linke Seite des Arms 84 ab und hebt dessen rechte Seite an. Sie verschiebt damit den Signalgeber 88 gegenüber dem Sensor 60 und spannt die Zugfeder 92 weiter an. Der Arm 82 dagegen bleibt unbelastet, solange nicht die Teilfläche 13 belastet wird.

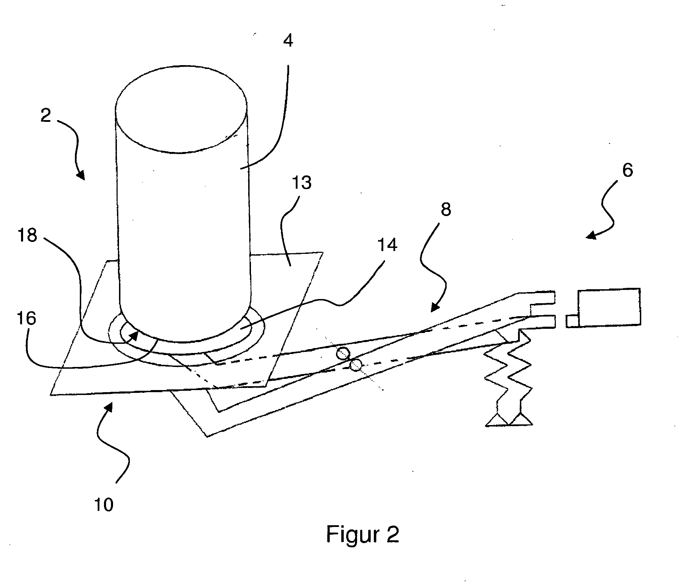

Figur 2 zeigt die Sensoranordnung 6 mit einem zylindrischen Versorgungsbehälter 4, der in den Aufstellbereich 2 eingebracht, aber auf der Aufstellplatte 12 noch nicht abgestellt wurde. Der Versorgungsbehälter 4 wird als Vorratsbehälter für Milch mit der Getränkezubereitungsmaschine mitgeliefert. Sein Leergewicht ist daher bekannt. Er hat eine kreisförmige Kontur 16, die ihm eine scheibenförmige Aufstellfläche 18 beschert. Ihr Durchmesser entspricht demjenigen der Teilplatte 14. Wird der Behälter 4 auf der Aufstellplatte 12 korrekt positioniert, so drückt er lediglich die Teilplatte 14 und damit das linke Ende des Arms 84 abwärts. Daraufhin verschiebt sich der Signalgeber 88 relativ gegenüber dem Sensor 60 nach oben und spannt die Feder 92 weiter an.

Die Federvorspannung der Feder 92 ist so bemessen, dass ihre Federkraft dem Leergewicht des Behälters 4 zuzüglich dem Gewicht einer gewissen Füllmenge an Milch des Behälters 4 entspricht, die als Mindestfüllmenge definiert wird. Die Mindestfüllmenge genügt für die Zubereitung eines einzigen Getränks, dem geräteseitig Milch zugegeben wird. Entnimmt die Getränkezubereitungsmaschine während der Zubereitungsvorgänge Milch aus dem Behälter 4, so sinkt der Füllstand. Ist ein Mindestfüllstand erreicht, unterschreitet die Gewichtskraft des wenig befüllten Behälters 4 den Betrag der Zugkraft der Feder 92. Die Feder 92 zieht folglich das rechte Ende des Arms 84 abwärts und aktiviert über den Signalgeber 88 den Sensor 60. Daraufhin gibt die Zubereitungsmaschine ein entsprechendes Signal an den Benutzer weiter. Er wird dadurch aufgefordert, Milch nachzufüllen.

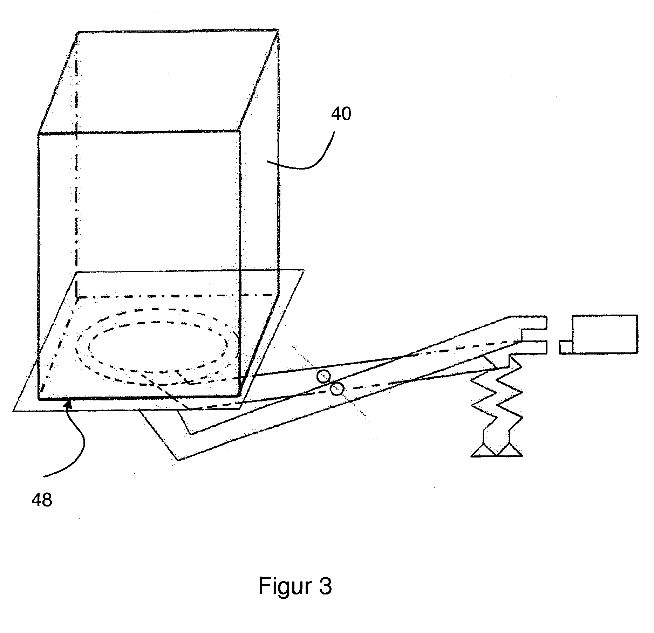

Milch wird heute beim Zubereitungsvorgang von Kaffeegetränken regelmäßig in kunststoff-beschichteten Verkaufsverpackungen, einem sog. Tetra-Pak^{®} zur Verfügung gestellt. Tetra-Paks^{®} sind regelmäßig kubisch geformt. Figur 3 zeigt einen kubischen Behälter 40 als Beispiel für ein Tetra-Pak^{®} im Aufstellbereich 2 und auf der Aufstellplatte 12. Seine Aufstellfläche 48 ist deutlich größer als die Aufstellplatte 14, aber etwas kleiner als die Aufstellplatte 12. Er belastet im Einsatzfall sowohl die Teilfläche 14 als auch die Teilplatte 13. Seiner Gewichtskraft wirken die Federn 90 und 92 gemeinsam entgegen. Entsprechend der Feder 92 sind sie gemeinsam auf das Leergewicht eines Tetra-Paks^{®} zuzüglich des Gewichts einer gewissen Füllmenge an Milch des Behälters 40 ausgelegt. Sobald also der Behälter 40 einen Mindestfüllstand unterschreitet, ziehen die Federn 90, 92 die rechten Seiten der Arme 82, 84 abwärts und verschieben damit die beiden Signalgeber 86, 88 relativ zum Sensor 60. Daraufhin wird ein entsprechendes Signal für das Erreichen eines Mindestfüllstands an der Getränkezubereitungsmaschine ausgegeben.

Da Milch ein verderbliches Produkt darstellt, kann eine längere Haltbarkeit der Zubereitungsmilch dadurch erreicht werden, dass sie in einem speziellen Kühlbehälter bevorratet wird. Um ihn von einer gewöhnlichen Verkaufsverpackung wie beispielsweise einem Tetra-Pak^{®} zu unterscheiden, weist der Kühlbehälter bzw. Versorgungsbehälter 4 eine zylindrische Form auf. Um nun unterscheiden zu können, in welchem Behälter der Bediener die Milch der Getränkezubereitungsmaschine zur Verfügung stellt, lässt sich die Umrissform der Behälter 4, 40 mittels der zweiten Erfassungseinrichtung 10 detektieren. Ist der Behältertyp bekannt, so kann mit Kenntnis seines Leergewichts und seines Volumens anhand des Gesamtgewichts des Behälters samt seines Inhalts ein Mindestfüllstand detektiert und angezeigt werden.

Da es sich bei der vorhergehenden, detailliert beschriebenen Sensoranordnung um ein Ausführungsbeispiel handelt, kann es in üblicher Weise vom Fachmann in einem weiten Umfang modifiziert werden, ohne den Bereich der Erfindung zu verlassen. Insbesondere können auch die konkreten Ausgestaltungen der zweiten Erfassungseinrichtung in anderer Form als in der hier beschriebenen folgen. Ebenso kann die erste Erfassungseinrichtung in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 2: Aufnahmebereich
- 4: Behälter
- 6: Sensoranordnung
- 8: erste Erfassungseinrichtung
- 10: zweite Erfassungseinrichtung
- 12: Aufstellplatte
- 13, 14: Teilplatte
- 16: Umriss
- 18: Stellfläche
- 40: Behälter
- 48: Aufstellfläche
- 60: Sensor
- 82, 84: Arm
- 86, 88: Signalgeber
- 90, 92: Zugfeder
- a: Achse
- d1, d2: Drehpunkt

## Patentansprüche

1. Getränkezubereitungsmaschine mit einem Aufnahmebereich (2) zur Aufnahme mindestens eines Ver- oder Entsorgungsbehälters (4; 40), und mit einer Sensoranordnung (6) zur Erfassung eines Befüllungszustands der Getränkezubereitungsmaschine in Bezug auf den Ver- oder Entsorgungsbehälter (40), die eine erste, durch das Gewicht des Ver- oder Entsorgungsbehälters betätigbare Erfassungseinrichtung (8) umfasst, die nur das Über- oder Unterschreiten eines Schwellwerts einer Befültung des Behälters oder eines Gesamtgewichts detektiert, mit einer zweiten Erfassungseinrichtung (10) der Sensoranordnung (6) zur Erfassung einer weiteren Information des Ver- oder Entsorgungsbehälters (4; 40) oder auf dem Ver- oder Entsorgungsbehälter (4; 40).

2. Getränkezubereitungsmaschine nach Anspruch 1, **dadurch gekennzeichnet, dass** die zweite Erfassungseinrichtung (10) eine räumliche Größe des Ver- oder Entsorgungsbehälters (4; 40) erfasst.

3. Getränkezubereitungsmaschine nach Anspruch 1 oder 2, **gekennzeichnet durch** mechanische Erfassungsmittel (13; 14) der zweiten Erfassungseinrichtung (10).

4. Getränkezubereitungsmaschine nach dem obigen Anspruch 3, **gekennzeichnet durch** die Erfassung einer Kontur einer Stellfläche (18) des Ver- oder Entsorgungsbehälters (4; 40).

5. Getränkezubereitungsmaschine nach dem obigen Anspruch 4, **gekennzeichnet durch** eine Aufstellplatte (12) für den Ver- oder Entsorgungsbehälter (4; 40) als Bestandteil der ersten Erfassungseinrichtung (10), mit mindestens zwei Teilplatten (13; 14) der Aufstellplatte (12), die jeweils unabhängig voneinander mit der Sensoranordnung (6) kommunizieren können.

6. Getränkezubereitungsmaschine nach dem obigen Anspruch 5, **gekennzeichnet durch** konzentrisch zueinander angeordnete Teilplatten (13; 14) der Aufstellplatte (12)

7. Getränkezubereitungsmaschine nach Anspruch 1 oder 2, **gekennzeichnet durch** optische Erfassungsmittel der zweiten Erfassungseinrichtung (10).

8. Getränkszubereitungsmaschine nach Anspruch 1 oder 7, **dadurch gekennzeichnet, dass** die zweite Erfassungseinrichtung ein zweidimensionales Muster erfasst.

9. Getränkezubereitungsmaschine nach einem der obigen Ansprüche, **gekennzeichnet durch** ein Wippensystem (12, 82, 84, d1, d2, 86, 88) als erste Erfassungseinrichtung (8).

10. Getränkezubereitungsmaschine nach dem obigen Anspruch 9, **gekennzeichnet durch** eine Vorspannung (90, 92) des Wippensystems (12, 82, 84, d1, d2, 86, 88).

## Claims

1. Beverage preparation machine having a receiving area (2) for receiving at least one supply container or disposal container (4; 40), and having a sensor arrangement (6) for detecting a filling state of the beverage preparation machine in relation to the supply container or disposal container (40), said sensor arrangement (6) comprising a first detection device (8) which can be actuated by the weight of the supply container or disposal container, said detection device (8) detecting only the overshoot or undershoot of a threshold value for filling the container or of an overall weight, with a second detection device (10) of the sensor arrangement (6) for detecting further information concerning the supply container or disposal container (4; 40) or on the supply container or disposal container (4; 40).

2. Beverage preparation machine according to claim 1, **characterised in that** the second detection device (10) detects a spatial size of the supply container or disposal container (4; 40).

3. Beverage preparation machine according to claim 1 or 2, **characterised by** mechanical detection means (13; 14) of the second detection device (10).

4. Beverage preparation machine according to the above claim 3, **characterised by** the detection of a contour of a footprint (18) of the supply container or disposal container (4; 40).

5. Beverage preparation machine according to the above claim 4, **characterised by** a mounting plate (12) for the supply container or disposal container (4; 40) as part of the first detection device (10), with at least two partial plates (13; 14) of the mounting plate (12) which can each communicate independently of one another with the sensor arrangement (6).

6. Beverage preparation machine according to the above claim 5, **characterised by** concentrically arranged partial plates (13; 14) of the mounting plate (12)

7. Beverage preparation machine according to claim 1 or 2, **characterised by** optical detection means of the second detection device (10).

8. Beverage preparation machine according to claim 1 or 7, **characterised in that** the second detection device detects a two-dimensional pattern.

9. Beverage preparation machine according to one of the above claims, **characterised by** a rocker system (12, 82, 84, d1, d2, 86, 88) as a first detection device (8).

10. Beverage preparation machine according to the above claim 9, **characterised by** a bias voltage (90, 92) of the rocker system (12, 82, 84, d1, d2, 86, 88).

## Revendications

1. Machine de préparation de boissons comprenant une zone de réception (2) destinée à recevoir au moins un récipient d'alimentation ou d'élimination (4; 40) et comprenant un agencement détecteur (6) permettant de détecter un niveau de remplissage de la machine de préparation de boissons en rapport avec le récipient d'alimentation ou d'élimination (40), qui comprend un premier dispositif de détection (8) pouvant être actionné par le poids du récipient d'alimentation ou d'élimination, qui ne détecte que le passage au-dessus ou en-dessous d'une valeur seuil d'un remplissage du récipient ou d'un poids total, avec un second dispositif de détection (10) de l'agencement détecteur (6) permettant de détecter une information supplémentaire du récipient d'alimentation ou d'élimination (4; 40) ou sur le récipient d'alimentation ou d'élimination (4; 40).

2. Machine de préparation de boissons selon la revendication 1, **caractérisée en ce que** le second dispositif de détection (10) détecte une dimension dans l'espace du récipient d'alimentation ou d'élimination (4; 40).

3. Machine de préparation de boissons selon la revendication 1 ou 2, **caractérisée par** des moyens de détection mécanique (13; 14) du second dispositif de détection (10).

4. Machine de préparation de boissons selon la revendication 3 ci-dessus, **caractérisée par** la détection d'un contour d'une surface de pose (18) du récipient d'alimentation ou d'élimination (4; 40).

5. Machine de préparation de boissons selon la revendication 4 ci-dessus, **caractérisée par** une plaque de placement (12) pour le récipient d'alimentation ou d'élimination (4; 40) en tant que partie constitutive du premier dispositif de détection (10), avec au moins deux plaques partielles (13; 14) de la plaque de placement (12) qui peuvent communiquer chacune avec l'agencement détecteur (6) de manière indépendante l'une de l'autre.

6. Machine de préparation de boissons selon la revendication 5 ci-dessus, **caractérisée par** des plaques partielles (13; 14) de la plaque de placement (12) concentriques l'une par rapport à l'autre.

7. Machine de préparation de boissons selon la revendication 1 ou 2, **caractérisée par** des moyens de détection optique du second dispositif de détection (10).

8. Machine de préparation de boissons selon la revendication 1 ou 7, **caractérisée en ce que** le second dispositif de détection détecte un motif bidimensionnel.

9. Machine de préparation de boissons selon l'une des revendications ci-dessus, **caractérisée par** un système de bascule (12, 82, 84, d1, d2, 86, 88) en tant que premier dispositif de détection (8).

10. Machine de préparation de boissons selon la revendication 9 ci-dessus, **caractérisée par** une précontrainte (90, 92) du système de bascule (12, 82, 84, d1, d2, 86, 88).
